# EUROPEAN PATENT APPLICATION

(11) **EP 3 663 033 A1**
(43) Date of publication of application: **10.06.2020**
(21) Application number: 18210713.6
(22) Date of filing: 06.12.2018
(51) Int. Cl.: B23P 15/40, B21D 53/64, B26B 21/56

(54) **LASER WELDED RAZOR BLADES**

(71) Applicant: BIC-Violex S.A., 145 69 Anixi, Attikis (GR)
(72) Inventor: Davos, Vasilios, 145 69 ANOIXI (GR); Koulourias, Georgios, 145 69 ANOIXI (GR); Polychronidis, Petros, 145 69 ANOIXI (GR)
(74) Representative: Peterreins Schley

(57) **Abstract**

The present disclosure relates to methods for manufacturing a razor cartridge component comprising continuously feeding an elongated band of material (12), separating one or more blade support elements (34c) from the elongated band of material (12), stabilizing the one or more separated blade support elements (34c) in a stationary position, providing one or more razor blades (125a, 125b) and laser welding the one or more razor blades (125a, 125b) to respective ones of the stabilized one or more blade support elements (34c).

## Description

### Technical Field

This disclosure relates to methods for manufacturing razor cartridge components, systems for manufacturing razor cartridge components and razor cartridge components being manufactured using the methods of the present disclosure. In particular, the present disclosure relates to attachment of razor blades to razor blade supports by laser welding.

### Background

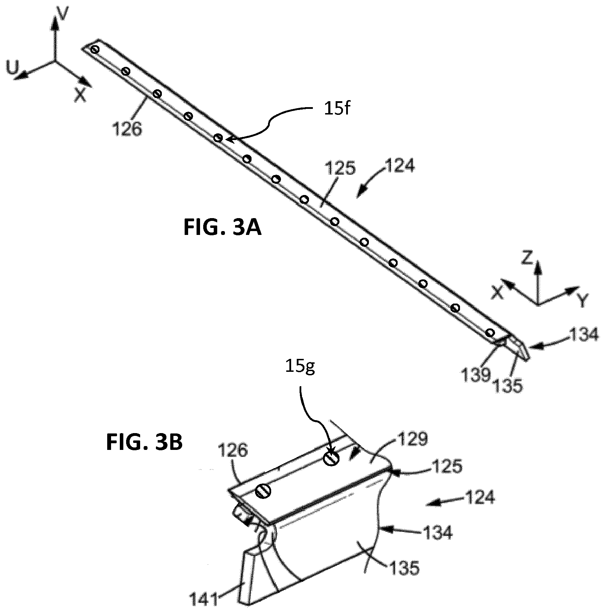

Blades for wet shavers come in two different varieties. In one case, a razor blade is formed in an integral manner (i.e., a portion for attaching the razor blade to a cartridge is formed integrally with a further portion carrying the razor edge). In the second variety, a razor blade is attached to a razor blade support, for instance an L-shaped razor blade support (see, e.g., blade support 124 in **FIGS. 3A** and **3B**). In this manner, different materials can be selected for the razor blade and the razor blade support which can be advantageous with respect to, e.g., cost and fabrication-related parameters. However, using a composite element with a blade and a separate blade support requires that the two elements are attached to each other in the fabrication process. This can be done by laser welding.

### Summary

In one general aspect, the present disclosure relates to a method of manufacturing a razor cartridge component. The method includes continuously feeding an elongated band of material, separating one or more blade support elements from the elongated band of material, stabilizing the one or more separated blade support elements in a stationary position, providing one or more razor blades and laser welding the one or more razor blades to respective ones of the stabilized one or more blade support elements.

In some examples the laser welding includes scanning a laser beam (e.g., by using one or more galvo scan mirrors to steer the laser beam).

In a second general aspect, the present disclosure relates to a razor cartridge component manufactured by the method of the first general aspect.

In a third general aspect, the present disclosure relates to a system for manufacturing a razor cartridge component, the system including a first feeding device to continuously provide an elongated band of material, a separation device configured to process the elongated band of material to obtain one or more separated blade support elements, a stabilizing device configured to stabilize the separated one or more blade support elements in a stationary position, a second feeding device for providing one or more razor blade and a welding station including a laser for laser welding the one or more razor blades to the stabilized one or more blade support elements.

The technique of the first to third general aspects can have the following advantages in some examples.

Firstly, stabilizing the razor blade support elements during the laser welding process improves the quality of the welds attaching the razor blade to the razor blade support. This is due to the fact that the work piece does not move at all during the welding process for generating the spot weld. Which means that the laser beam is always directed to the same place(s) of the work piece over the entire welding process.

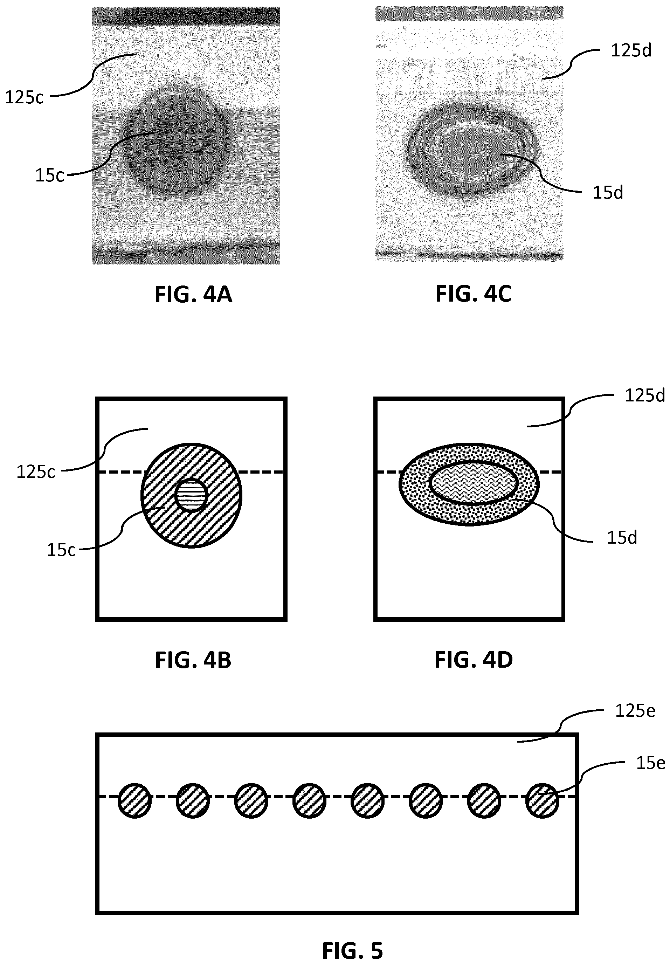

Accordingly, weld spots generated when using the technique of the present disclosure can be circular and smooth (see, e.g., example weld spot in **FIG. 4A**) compared to oval and asymmetric weld spots generated by some prior art techniques using moving blade support elements (see, e.g., example weld spot of **FIG. 4C**). These differences in appearance can be indicative of a higher quality of the welds fabricated using the techniques of the present disclosure.

Secondly, a throughput of the manufacturing process can be increased in some examples. In particular, when stabilizing the blade support elements and using a scanning laser beam (e.g., scanned by a galvo laser head) the time for welding can be increased which in turn can lead to a higher throughput compared to some prior art techniques. Again, this can also be connected to the fact that the laser beam can be delivered to the same spot on the stabilized work piece during the welding process when using the techniques of the present disclosure.

Thirdly, the spot parameters of the welds (e.g., position and size) can be more easily programmed when the blade support elements are stabilized in a stationary position (and particularly when using a scanning laser beam). In this manner, the techniques of the present disclosure can make the manufacturing process more flexible and less error-prone.

Several terms are used in the present disclosure in a particular sense.

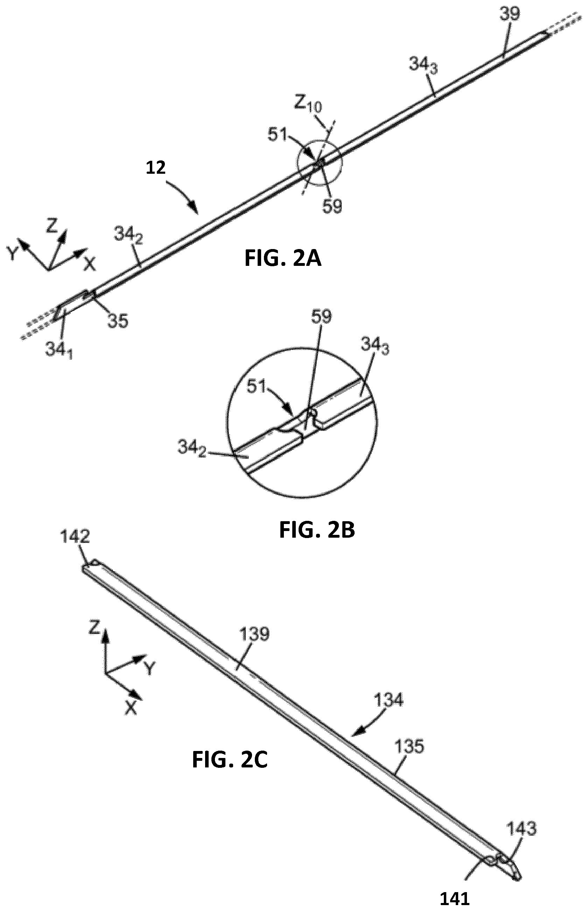

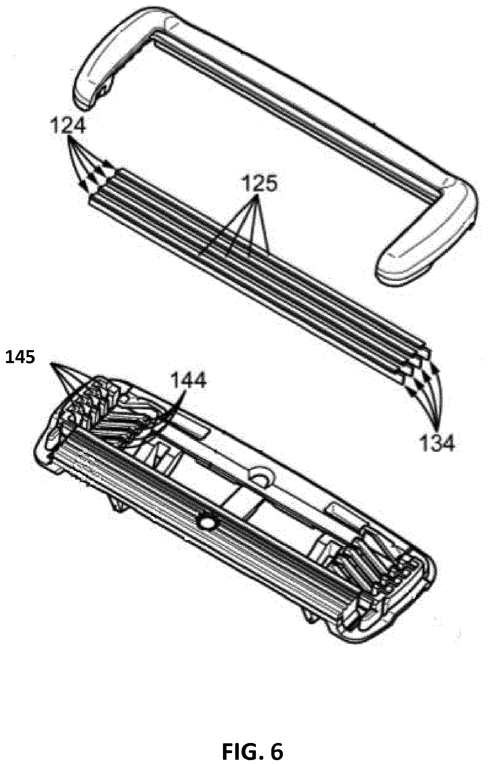

The term 'razor blade support' refers to a component as inserted, e.g., in a razor cartridge carrying a respective razor blade attached to it (see., e.g., razor blade supports 134 in **FIG. 6**). The term 'razor blade support element' is used in the present disclosure as referring to a future razor blade support in all the production stages of a manufacturing process. Therefore, the razor blade support element can change its shape when proceeding through different parts of the production process. For example, the term 'razor blade support element' might refer to a piece of metal which will be manufactured into one future razor blade support but also additional components (i.e., remains of a dicing process) which will be removed in further steps of the fabrication process. In addition, multiple razor blade support elements can be contingent at a certain point in time of the fabrication process (see, e.g., **FIG. 2A** which depicts two razor blade support elements 34₂ and 34₃ in right after a bending step has taken place but prior to separation from a band of material).

A 'razor cartridge component' in the present disclosure is a component in the form included in a razor cartridge. For instance, a razor blade support with an attached razor blade (e.g., by using the laser welding techniques of the present disclosure) is an example of a 'razor cartridge component'.

The term 'light' is not limited to visible radiation in the present disclosure. It also encompasses non-visible radiation (e.g., infrared radiation or ultraviolet radiation).

The term 'stationary position' as used in the present disclosure defines a stationary position to a natural reference frame. An element does not move relative to the reference frame in the stationary position. Typically, the reference frame is attached to a housing of a machine tool of a system for manufacturing razor cartridge components or a shop floor.

The term 'elongated band of material' in the present disclosure refers to a band of material having one direction of extension which is considerably more extended than the other two directions. For instance, the direction of longest extension can be at least 10 times or at least 100 times longer than the direction of larger extension of the remaining two directions of extension.

Unless defined otherwise, the expression "about" in the present disclosure can indicate a deviation of +/- 10% from a nominal value (e.g., "about 100 µm" refers to a range from 90 µm to 110 µm).

### Description of the Drawings

**FIG. 1** schematically illustrates a system for manufacturing a razor cartridge component according to the present disclosure.
**FIGS. 2A, 2B** and **2C** show an elongated band of material bent to generate blade support elements of the present disclosure.
**FIGS. 3A** and **3B** show finished razor cartridge components including razor blades welded to razor blade supports according to the present disclosure.
**FIGS. 4A** and **4B** depict weld spots generated with the laser welding technique of the present disclosure (**FIG. 4A** is an actual photo and **FIG. 4B** is a corresponding schematic drawing).
**FIGS. 4C** and **4D** depict weld spots generated with a prior art laser welding technique (**FIG. 4C** is an actual photo and **FIG. 4D** is a corresponding schematic drawing).
**FIG. 5** illustrates an example razor cartridge component including a razor blade welded to a laser blade support with multiple weld spots.
**FIG. 6** is an exploded view of a razor cartridge including multiple razor cartridge components each having a razor blade attached to a razor blade support by using techniques of the present disclosure.
**FIG. 7** is a flow diagram illustrating methods of manufacturing a razor cartridge component of the present disclosure.

### Detailed Description

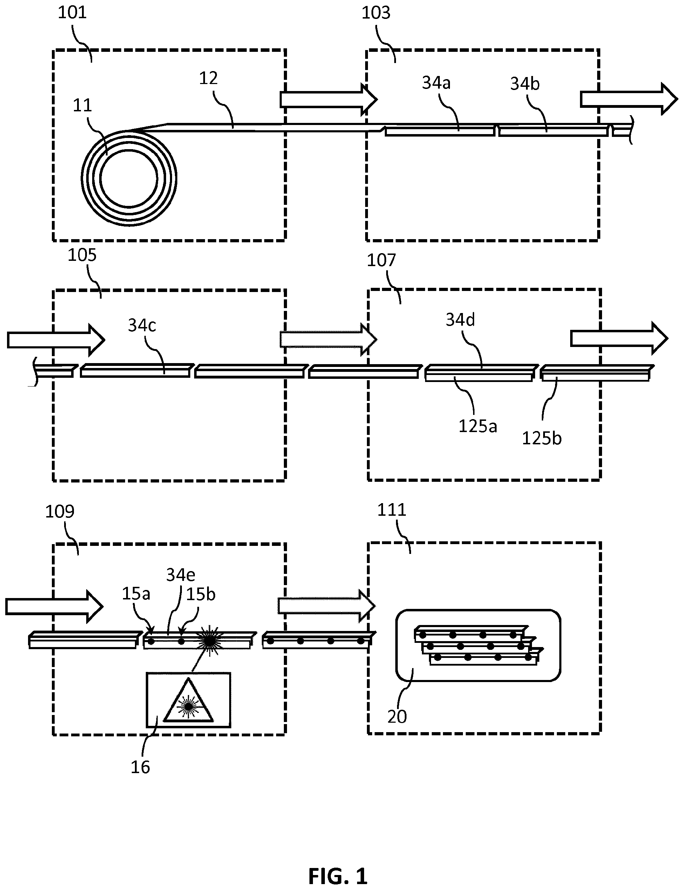

**FIG. 1** illustrates a system for manufacturing a razor cartridge component according to the present disclosure. The different machine tools of the example system are depicted in **FIG. 1** only in a fairly schematic manner to avoid obfuscating the relevant aspects of the techniques of the present disclosure. The skilled person is aware of ways of designing the different machine tools of the present disclosure based on the information given in the present disclosure.

In addition, the orientation and arrangement of the work pieces (e.g., the elongated band of material, the razor blade support elements and the razor blade) in **FIG. 1** is only illustrative. In particular, the orientation of the work pieces relative to each other and the orientation of the work pieces relative to the different stations or machine tools, the spacing between the work pieces and the dimensions of the work pieces are only illustrative.

The system of **FIG. 1** includes a feeding device 101 to continuously provide an elongated band of material 12 and a separation device 103, 105 configured to process the elongated band of material 12 to obtain one or more separated blade support elements 34c. The system additionally includes a stabilizing device 109 configured to stabilize the separated one or more blade support elements in a stationary position, a feeding device for providing one or more razor blades 107 and welding station 16 including a laser for laser welding the one or more razor blades to the stabilized one or more blade support elements.

These devices of the system for manufacturing a razor cartridge component and further optional devices will be discussed in the subsequent sections. The stabilizing device 109 and the welding station 16 will be discussed first.

According to the present disclosure, the one or more razor blade support elements are stabilized (in the example of **FIG. 1** a single razor blade support element 34e) in a stationary position for the duration of the laser welding process. As the razor blade support elements are moving through the manufacturing system, this can include stopping the one or more razor blade support elements 34e.

For example, the blade support elements 34e can be kept in the stationary position for at least 30ms (e.g. at least 50ms). The blade support elements can be kept in the stationary position for at most 150ms (e.g., for at most 110ms). In one example, the razor blade support elements 34e can be kept in the stationary position for between 30ms and 150ms (e.g., between 50ms and 110ms). Other dwell times in the stationary position are possible depending on, e.g., parameters of the welding station 16 (e.g., a type of an employed laser device), material and geometry of the razor blades and razor blade support elements, and a number of desired weld spots 15a, 15b.

The stabilizing device 109 can include any assembly for stabilizing the razor blade support elements 34e in the stationary position. For instance, the stabilizing device 109 can include a support supporting the razor blade support elements from below (e.g., a support defining a surface corresponding to a surface of the blade support element 34e, or a portion thereof, on which the blades support element rests to be stabilized in the stationary position). In other examples, the razor blade support elements 34e can be held at one or two ends of the razor blade support element 34e to stabilize the razor blade support element 34e in the stationary position.

In some examples, the razor blade support elements are held in the stationary forces mechanically (e.g., by frictional or clamping forces). Other ways of stabilizing the one or more blade support elements in the stationary position, e.g., by magnetic forces, suction or other means can alternatively or additionally be employed in some examples.

In addition or alternatively, the stabilizing device 109 can stabilize multiple razor blade support elements at the same time. For example, multiple razor blade support elements can be arranged in a side-by-side relationship and held in the stationary position in the stabilizing device 109.

Aspects of the welding station 16 will be discussed next.

In general, the welding station 16 can include any type of laser device which can weld razor blades to the respective razor blade support elements in the stationary position.

In some examples, the welding station 16 includes a laser device capable of scanning a laser beam over the stationary razor blade support element 34e.

On example of a device capable of scanning a laser beam is a device including one or more galvo (short for "galvanometer") scan mirrors (e.g., two or more than two galvo scan mirrors) to steer the laser beam. For instance, the laser device can include a laser head configured to emit a laser beam towards the stabilized razor blade support elements which includes galvo mirrors for beam steering.

In one example of a device including galvo scan mirrors, a laser head includes two mirrors which are mounted on a galvo each. The galvos can rotate the respective attached mirror in one rotational direction. The rotation directions of the two mirrors are different (e.g., orthogonal). In one example, a rotation axis of a first mirror is parallel to a surface of the work piece the laser beam is to be delivered to. A rotation axis of a second mirror is normal to the surface of the work piece the laser beam is to be delivered to. The rotary motion of the two mirrors translates into a linear motion (in two orthogonal directions) over the surface of the work piece. The galvos of the mirrors can include rotary electric motors. These motors can be laid out to achieve high scanning speeds.

In other examples of a device including one or more galvo scan mirrors, the device can be configured to scan only over one linear direction.

In other examples, the laser beam can be steered by other means than galvo scan mirrors. For instance, mirrors can be moved by other means than galvos to steer the beam. In still other examples, a laser beam can be steered active optical components (e.g., optical beam shaping components).

The movement of the scanning laser beam can be controlled by a controller, as will be discussed in more detail below.

The laser device can include any laser source suitable to weld razor blade support elements (which are frequently both metallic components of different types of alloys). In one example, the laser source can be a solid-state laser (e.g., a Nd:YAG laser), a gas laser (e.g., a CO₂ laser) or a diode laser. In other examples, the laser source can include a fiber laser (e.g., a fiber laser including an active gain medium being a fiber doped with rare earth dopants).

The laser device can have a wavelength of between 900nm and 1200nm (e.g., between 1050nm and 1100nm) in some examples.

The laser welding can include generating multiple weld spots 15a, 15b for each blade support element while the one or more blade support elements are in the stationary position. For example, a number of the different weld spots 15a, 15b for each blade support elements can be between 3 and 20 (e.g., between 5 and 16). The number of weld spots can depend on the design of the razor cartridge component (e.g., a length of the razor blade of a razor cartridge component).

In the present disclosure, laser welding to generate weld spots is discussed in many concrete examples. However, the techniques of the present disclosure are not limited to generating weld spots to attach razor blades to razor blade supports. In other examples, the laser welding process can generate different shapes of welds (e.g., elongated or linear welds or more complex shapes). For instance, in examples using a scanning laser beam other shapes of welds than spot welds can be generated while a razor blade support element is in the stabilized position using the techniques described in the present disclosure.

In the example system of **FIG. 1**, the welding station 16 includes a laser device (e.g., with a laser head) generating a single laser beam for welding. Thus, multiple weld spots 15a, 15b of a razor blade support element are generated in a sequential manner. In other examples, the welding station can be configured to emit multiple laser beams to generate multiple weld spots simultaneously (and of the laser devices discussed above can be used in such welding station configured to emit multiple laser beams). The multiple weld spots can belong to a single blade support element or more than one blade support element. In addition or alternatively, the welding station can be configured to weld multiple razor blades to respective blade support elements simultaneously.

In some examples, the stabilizing device 109 can be configured to keep multiple blade support elements in the stationary position at the same time. In this situation, one or more laser beams can be scanned to generate all required weld spots for the multiple blade support elements (in a sequential or parallel manner, or a mixture of bode modes). In some examples, a laser beam can be controlled to weld all weld spots of a first stabilized razor blade support element in a first period of time and all weld spots of a second stabilized razor blade support element in a second, subsequent period of time. In other examples, the laser beam can be controlled to jump between different stabilized razor blade support elements to generate weld spots.

The welding stations of the present disclosure can deliver one more laser beams directly to the surface of the work piece (i.e., the laser blade support element with a corresponding razor blade). In particular, no welding mask has to be employed in the welding process.

Further aspects of the geometry of the razor cartridge component and the positioning of the weld spots will be discussed in connection with **FIGS. 3A** and **3B** below.

Returning to of **FIG. 1**, we will subsequently discuss other stations or working tools of the system of manufacturing a razor cartridge component.

In the techniques of the present disclosure, the razor blade support elements are fabricated in a continuous process. In one example, the different working tools or stations of the system for manufacturing razor cartridge components are set up in a linear manner. The different working tools or stations can operate continuously, either in an intermittent or nonintermittent manner. The different working tools or stations can operate in a clocked manner. Two or more working tools or stations can have the same cycle time (e.g., work synchronously) or different cycle times. The system for manufacturing razor cartridge components can operate in a fully automated manner in some examples.

The system for manufacturing razor cartridge components can includes one or more buffers between different working tools or stations to adjust for different cycle times. For example, the system can include a buffer prior to the feeding device for providing one or more razor blades 107 or prior to the stabilizing device 109 for buffering two or more razor blade support elements (and respective razor blades in case of the stabilizing device). The so buffered two or more razor blade support elements can then processed as a batch in the subsequent working tool or station of the system. For instance, the two or more razor blade support elements can be stabilized at the same time (as also discussed above) and then welded by the welding station 16 in a single welding process. Similar buffers can exist in other places of the system. The feeding device 101 to continuously provide an elongated band of material 12 can feed the band of material from a coil 11. The feeding of the elongated band of material 12 can happen continuously in an intermittent or nonintermittent manner.

The elongated band of material 12 is subsequently transported to the separation device 103, 105 configured to process the elongated band of material 12 to obtain one or more separated blade support elements 34c.

The separation device 103, 105 has two functional units in the example of FIG. 1. In a first bending unit 103, a portion of the elongated material band of material is bent to bring the razor blade support elements into a desired shape. The bending unit 103 can include any device for bending the elongated band of material 12 (e.g., a pressing device). In many examples, the desired shape can be an L-shape (wherein the angle between the two parts of the L-shape can vary). The system can include a punching station for punching the elongated band of material 12 prior to the bending operation (e.g., forming notches in the elongated band of material 12). A close-up view of a notch 59 punched into the elongated band of material 12 is shown in **FIG. 2B**.

An example of the geometry of the elongated band of material before and after the bending (and optional dicing) operation is depicted in **FIGS. 2A** and **2B**.

In **FIG. 2A**, the elongated band of material 12 is transported in the positive X-direction of the coordinate system depicted in **FIG. 2A** (i.e., from left to right). On the left-hand side, a section of the band of material 34₁ is depicted which has not yet been bent. In the middle section, a first blade support element 34₂ which has just undergone the bending process is shown. On the right-hand side, a second blade support element 34₃ which has been bent in a preceding bending operation can be seen. As also depicted in **FIG. 2A**, the elongated band of material 12 has been provided with notches 59 in areas 51 between two blade support elements to facilitate the bending process (e.g., by a punching station upstream of the bending station). As discussed, the bending operation generates an L-shaped razor blade support element having a first surface 35 for mounting in a razor cartridge and a second surface 39 onto which the razor blades are to be welded.

The elongated band of material 12 (and thus the razor blade support elements and the razor blades fabricated thereof) can be made from a metal or an alloy (e.g., a stainless-steel alloy). The razor blade support elements and the razor blades can be made from different types of material (e.g., different metals or alloys)

As can be seen in **FIG. 2A**, a bend axis of the bending step is parallel to the elongation direction of the elongated band of material 12. Moreover, a width of the elongated band of material in a direction orthogonal of the elongation direction of the elongated band of material (i.e., an extension in the Z-direction as indicated in **FIG. 2A**) before bending can correspond to an extension of the blade support element elements (e.g., blade support element 34₂) after bending along a curved path following the bent profile (e.g., the L-shape). In other words, a portion that is bent into a blade support element extends from on edge of the elongated band of material 12 to the opposite edge of the elongated band of material 12. A length of blade support elements (i.e., a largest extension) coincides with the axis of extension of the extended band of material 12. In some prior art technique, the blade support elements are arranged orthogonally to the transport direction of the system during the bending process.

As can be seen in **FIG. 2C**, the bending process can produce little scrap material as almost the complete elongated band of material is processed into blade supports.

In some examples, the bent blade support elements 34₂, 34₃ are separated from the elongated band of material 12 in a separation station 105. This can involve cutting the band of material 12 to separate the one or more separated blade support elements 34c including the respective bent portions. The separation station 105 can, e.g., include a pressing device or a punching device to separate the bent blade support elements 34₂, 34₃.

In some examples, the separating one or more blade support elements includes separating single blade support elements 34c from the elongated band of material. Each single blade support element 34c is configured so carry one razor blade in the finished razor cartridge component.

In other examples, separating one or more blade support elements includes separating multiple contiguous blade support elements from the elongated band of material (not shown in **FIG. 1**). For example, a set of two or more or three or more contiguous blade support elements can be separated at a time from the elongated band of material. In this example, the contiguous blade support elements will be separated into single blade support elements in a further separation step.

An example of a single blade support element 134 exiting the cutting station 105 is depicted in **FIG. 2C**. As can be seen, the blade support element is a L-shaped profile defining a first flat portion 139, a second flat portion 135 and a bent portion in between the first and second flat portions 139, 135. The first flat portion 139 is designed so that a razor blade can be attached thereto. The second flat portion 135 is designed to be inserted in a corresponding holding device of a razor cartridge.

Typically, the razor blade support elements 134 have a longest direction of extension ("length") which extends in parallel to an edge of razor blade attached thereto (i.e., in an orthogonal direction to the L-shaped cross-section of the razor blade support element 134) between a first end 141 and a second end 142 of the razor blade support element 134. In other words, an extension following the L-shaped cross-section is smaller than the length.

In some examples, a length of the razor blade support elements 134 can be between 1 cm and 6 cm (e.g., between 2 cm and 4 cm). A width of the first flat portion 139 can be between 0.2 mm and 2 mm (e.g., between 0.4 mm and 1.2 mm). A width of the second flat portion 135 can be between 0.5 mm and 3 mm (e.g., between 1 mm and 2 mm). A thickness of the elongated band of material 12 and thus the blade support elements 134 fabricated thereof can be below 0.5 mm (e.g., between 0.1 mm and 0.35 mm).

Further details regarding the process of feeding the elongated band of material, bending the portions of the elongated band of material and separating the respective blade support elements can be found described in the European patent EP 2 373 444 B1 entitled *"Method and Apparatus for Manufacture of a Razor Head Component"* (the contents of which are hereby incorporated in this application in its entirety). In particular, EP 2 373 444 B1 describes in connection with figures 1 to 11 aspects of different stations of a system that can be used for performing the respective steps of the process of the present disclosure. In addition, figures 18 to 30 of EP 2 373 444 B1 and the corresponding passages of the description discuss aspects of the geometry and further properties of blade support elements and razor blades that can also be used for the respective components of the present disclosure. The separated blade support elements are subsequently fed into a downstream station of the system for manufacturing razor blade components.

In the feeding device for providing one or more razor blades 107 the separated razor blade support elements (e.g., razor blade support element 34d) are provided with respective razor blades 125a, 125b. The razor blade support elements 34d can be provided with single razor blades 125a, 125b in some examples. In other examples, multiple razor blades 125a, 125b are provided in a contiguous component. In some examples, the feeding device for providing one or more razor blades 107 includes a pick-and-place device which is configured to pick single razor blades 125a, 125b and place them adjacent to a respective razor blade support element 34d the respective razor blade shall be attached to.

As already explained in the initial comments regarding the system of **FIG. 1, FIG. 1** is a merely schematic illustration of the steps of the manufacturing process. In the case of the feeding device for providing one or more razor blades 107, this means, e.g., that the orientation of the razor blade support elements 34d can be different than shown in **FIG. 1** (which shows an orientation that does not change between the bending station 103, the separating station 105 and the feeding device for providing one or more razor blades 107). For example, the orientation could be changed from a first orientation in which a length of the razor blade support elements parallel to the transport direction (as shown in **FIG. 1**) to a second orientation in which the length of the razor blade support elements is orthogonal to the transport direction before or in the feeding device for providing one or more razor blades 107. The razor blade support elements 34d with respective provided razor blades 125a, 125b are then stabilized in a stationary position and welded as described above.

The system can be configured to repeat the separating, stabilizing, providing and laser welding steps to continuously weld razor blades to razor blade support elements in a continuous manufacturing process. In some examples, the system of the present disclosure can be faster than prior art systems (e.g., 20% to 60%) and thus produce a higher number of razor cartridge components per time unit.

**FIGS. 3A** and **3B** illustrate the resulting razor cartridge components 124. As can be seen a razor blade 125 has been welded to a razor blade support 134 at multiple weld spots 15f, 15g. The razor blade edge 126 extends beyond the razor blade support 134.

As shown in **FIGS. 3A** and **3B****,** the weld spots 15f, 15g are arranged in a linear, equidistant arrangement. However, the weld spots cane be arranged differently for other razor cartridge components 124. In fact, when using the techniques of the present disclosure, weld spot arrangement can be changed with relative ease in some situations (e.g., through a software interface as discussed below).

For instance, the weld spots can be arranged in a non-equidistant manner. In addition or alternatively, the weld spots can be arranged in a 2D-pattern over a surface of the working piece (e.g., in a sinusoidal or saw-tooth pattern). In addition or alternatively, a size of the weld spots can be changed.

Moreover, the laser beam can be supplied to the razor blade support elements from different sides in different examples. In **FIG. 1**, the beam is supplied to a razor blade resting on the respective razor blade support element. In other example, the beam delivery can take place from the other side.

As can be seen, multiple spot welds 15f, 15g are provided to attach the razor blade 125 to the **FIG. 3B** shows close-up of a first end 141 of the razor cartridge components 124 of **FIG. 3A****.** Further aspects of the weld spots will be discussed in connection with **FIGS. 4A-4D** and **FIG. 5** in the subsequent sections.

**FIGS. 4A-4D** shows photos (**FIGS. 4A** and **4C**) and corresponding schematic drawings (**FIGS. 4B** and **4D**) of weld spots 15c, 15d generated with the technique of the present disclosure (**FIGS. 4A** and **4B**) and a prior art technique (**FIGS. 4C** and **4D**). All figures show details of the so fabricated razor cartridge components seen from above (i.e., looking at the razor blades 125c, 125d).

It is directly apparent that the appearance of the weld spots generated by using the technique of the present disclosure (weld spot 15c in **FIG. 4A**) and the prior art technique (weld spot 15d in **FIG. 4C**) is markedly different. On the one hand, the weld spot 15c generated by the present disclosure's technique has a circular shape. The weld spot 15d generated by the prior art technique is oval (and asymmetric). some examples, the weld spots of the present disclosure can have a slight ellipticity in which the major axis is less than 10% larger than the minor axis. As can be seen in **FIG. 4C**, in the prior art weld spot the major axis is about twice as large as the minor axis.

Moreover, a surface appearance is smoother for the weld spot 15c generated by the present disclosure's technique. As can be seen in **FIG. 4C**, the weld spot 15d generated by using the prior art fabrication technique shows marked irregularities and different plateaus.

The weld spots might not only differ in terms of the appearance. Rather, the weld spots of the present disclosure can be of higher quality than the weld spots of the prior art in some examples (e.g., provide a more stable and/or more durable connection between the razor blade and the razor blade support). This can be attributed to the fact that the razor blade support elements are stabilized in a stationary position as discussed in the present disclosure in some examples.

In view of this, the present disclosure also relates to a razor cartridge component (e.g., a razor blade attached to a razor blade support) manufactured by the techniques described therein (and in particular by using a technique in which a razor blade support element is stabilized in a stationary position during the welding process). Particularly, the weld spots of such razor cartridge components can be circular (i.e., a portion of the weld spot visible when inspecting the razor cartridge component from the outside has a circular circumference; the weld spots form a plug reaching into the razor blades and the razor blade support element which might be shaped differently).

However, it should be pointed that it cannot be deferred from a particular shape of a weld spot that a razor cartridge component has been or has not been fabricated using the techniques of the present disclosure. For example, it might be the case that weld spots generated by using some techniques described in the present disclosure can have an oval or elongated shape. Returning to the description of the manufacturing process, after the welding process the razor cartridge components (including one razor blade support and an attached razor blade each) are provided to a cartridge assembly station where one or more razor cartridge components are integrated in a razor cartridge 20.

In some examples, this can include stacking a razor cartridge component including a razor blade welded to a respective blade support element and one or more further razor cartridge component and integrating the stacked razor blades welded to blade supports in a razor cartridge. For instance, the razor cartridge components including the razor blade welded to a respective blade support element can be clamped to a cartridge housing by one or more clips or other fastening means.

**FIG. 6** shows an exploded view of a razor cartridge including multiple razor cartridge components 124 (each including a razor blade 125 attached to a respective razor blade support 134) fabricated by using techniques of the present disclosure. The razor cartridge of **FIG. 6** has four razor cartridge components 124 as shaving blades (i.e., four blades). In other examples, a razor cartridge can include more or less razor cartridge components as shaving blades (e.g., two or three, five six or more than six).

Moreover, the razor cartridge can include additional components. For example, the razor cartridge components 124 can be connected to a housing of the razor cartridge by connection elements 144, 145 (including a fixed or flexible mounting).

The razor blade components manufactured by the methods of the present disclosure can also be used as a trimming blade in a razor cartridge (not shown in **FIG. 6**).

It should be pointed out that the different working tools or stations described herein and shown in **FIG. 1** not necessarily are separate devices that are arranged in a linear manner as shown in **FIG. 1**. Rather, the respective devices or stations are defined as referring to functional units performing the respective tasks. The devices or stations can be separate entities in an upstream-downstream relationship or integrated in one combined entity.

The system can include additional working tools or stations not shown in **FIG. 1** to perform additional operations. For example, the elongated band of material can be provided with a groove in parallel with the direction of elongation prior to the bending.

As already discussed above, the welding station delivering the one or more laser beams can be controlled by software. In some examples, respective positions of the weld spots are preprogrammed (i.e., fixed in space prior to the manufacturing process of the present disclosure).

In one example, a user can select positions of the weld spot (and potentially other parameters of the weld spots) through a user interface (e.g., a graphical user interface). This data is the transmitted to a controller of the welding station of the systems for manufacturing razor cartridge components of the present disclosure. The controller can, based on this data, control the delivery of one or more laser beams to generate the weld spots.

In particular, in case of the welding station including a beam steering device with one or more galvos, the controller can move mirrors attached to the galvos to deliver a laser beam to the preprogrammed locations.

The stabilizing of the blade support elements in a stationary position according to the present disclosure can facilitate this preprogramming of the locations (or other parameters of the weld spots) as the laser blade support elements can be precisely located during the welding process in a predictable position.

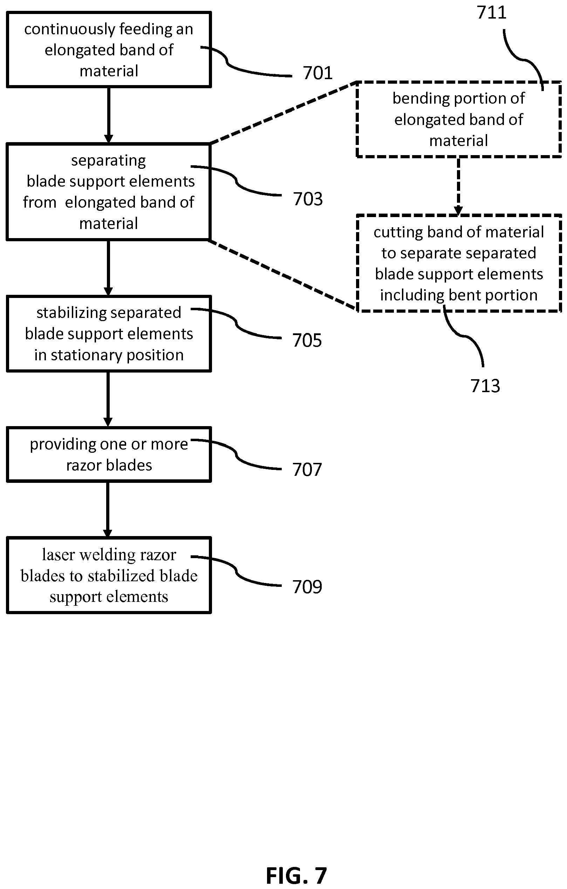

In the same manner as described above, a user can modify the positions of the weld spots during the user interface. As discussed above, a scanning laser device can be capable of delivering a laser beam to any location in a one-dimensional or two-dimensional field. Finally, **FIG. 7** is a flow diagram illustrating methods of manufacturing a razor cartridge component of the present disclosure already discussed in detail above.

The method comprises continuously feeding an elongated band of material 701, separating one or more blade support elements from the elongated band of material 703, stabilizing the one or more separated blade support elements in a stationary position 705. The method further comprises providing one or more razor blades 707 and laser welding the one or more razor blades to respective ones of the stabilized one or more blade support elements 709. Optionally, the method can also include bending a portion of elongated band of material 711 and cutting the band of material to separate the one or more separated blade support elements including the bent portion 13. As discussed, a bend axis of the bending step can be parallel to the elongation direction of the elongated band of material.

In **FIG. 7** and the preceding sections the steps of the manufacturing method have been presented in a particular order. In other examples, the order can be different, or multiple steps can be carried out in a partially or completely overlapping manner (unless the techniques described in the present disclosure require a particular order).

The methods for attaching razor blades to razor blade supports, apparatus for attaching razor blades to razor blade supports and razor blades having razor blades supports attached with the methods of the present disclosure have been described in the previous sections in some detail. The present disclosure also encompasses the techniques of the following embodiments:
1. A method for manufacturing a razor cartridge component, comprising:
   continuously feeding an elongated band of material;
   separating one or more blade support elements from the elongated band of material;
   stabilizing the one or more separated blade support elements in a stationary position;
   providing one or more razor blades; and
   laser welding the one or more razor blades to respective ones of the stabilized one or more blade support elements.
2. The method of embodiment 1, further comprising repeating the separating, stabilizing, providing and laser welding steps to continuously weld razor blades to razor blade support elements in a continuous manufacturing process.
3. The method of embodiment 1 or embodiment 2, wherein laser welding comprises scanning a laser beam over the stabilized one or more separated blade support elements.
4. The method of embodiment 3, wherein scanning the laser beam includes using one or more galvo scan mirrors to steer the laser beam.
5. The method of any one of embodiments 1 to 4, wherein laser welding includes generating multiple weld spots for each blade support element while the one or more blade support elements are in the stationary position.
6. The method of embodiment 5, wherein a number of the different weld spots for each blade support elements is between 3 and 20, optionally between 6 and 16.
7. The method of embodiment 4 or embodiment 5, wherein respective positions of the weld spots are preprogrammed.
8. The method of embodiment 7, further comprising preprogramming the positions of the weld spots.
9. The method of any one of the preceding embodiments 1 to 8, wherein separating one or more blade support elements includes separating single blade support elements from the elongated band of material.
10. The method of any one of the preceding embodiments 1 to 8, wherein separating one or more blade support elements includes separating multiple contiguous blade support elements from the elongated band of material.
11. The method of any one of the preceding embodiments, wherein separating one or more blade support elements from the elongated band of material comprises:
   bending a portion of elongated band of material; and
   cutting the band of material to separate the one or more separated blade support elements including the bent portion.
12. The method of embodiment 11, wherein a bend axis of the bending step is parallel to the elongation direction of the elongated band of material.
13. The method of any one of the preceding embodiments, wherein continuously feeding an elongated band of material includes feeding the band of material from a coil.
14. The method of any one of the preceding embodiments, wherein continuously feeding an elongated band of material includes feeding the band of material continuously in an intermittent or nonintermittent manner.
15. The method of any one of the preceding embodiments, wherein the one or more blade support elements are not moving in the stationary position.
16. The method of any one of the preceding embodiments, wherein the one or more blade support elements is kept in the stationary position for at least 30ms, optionally for at least 50ms.
17. The method of any one of the preceding embodiments, wherein the one or more blade support elements is kept in the stationary position for at most 150ms, optionally for at most 110ms.
18. The method of any one of the preceding embodiments, wherein laser welding includes welding multiple razor blades to respective blade support elements simultaneously.
19. The method of any one of the preceding embodiments, further comprising:
   stacking the razor blade welded to a respective blade support element and one or more further razor blades welded to respective blade support elements; and
   integrating the stacked razor blades welded to blade supports in a razor cartridge.
20. The method of any one of the preceding embodiments, wherein weld spots produced by the laser welding are circular.
21. The method of any one of the preceding embodiments, wherein stabilizing the one or more separated blade support elements in a stationary position includes stopping the one or more separated blade support elements.
22. A razor cartridge component manufactured by the methods of any one of embodiments 1 to 21.
23. The razor cartridge component of embodiment 22, wherein weld spots of welds securing razor blades to blade supports are circular.
24. A system for manufacturing a razor cartridge component, comprising:
   a first feeding device to continuously provide an elongated band of material a separation device configured to process the elongated band of material to obtain one or more separated blade support elements;
   a stabilizing device configured to stabilize the separated one or more blade support elements in a stationary position;
   a second feeding device for providing one or more razor blades;
   a welding station including a laser for laser welding the one or more razor blades to the stabilized one or more blade support elements.
25. The system of embodiment 24, wherein the welding station is configured to scan a laser a laser beam over the stabilized one or more separated blade support elements.
26. The system of embodiment 25, wherein the laser includes one or more galvo scan mirrors to steer the laser beam, optionally wherein the laser includes two galvo scan mirrors
27. The system of any one of embodiments 24 to 26, further comprising a user interface configured to receive user commends defining positions of weld spots.

## Claims

1. A method for manufacturing a razor cartridge component, comprising:
continuously feeding an elongated band of material;
separating one or more blade support elements from the elongated band of material;
stabilizing the one or more separated blade support elements in a stationary position;
providing one or more razor blades; and
laser welding the one or more razor blades to respective ones of the stabilized one or more blade support elements.

2. The method of claim 1, further comprising repeating the separating, stabilizing, providing and laser welding steps to continuously weld razor blades to razor blade support elements in a continuous manufacturing process.

3. The method of claim 1 or claim 2, wherein laser welding comprises scanning a laser beam over the stabilized one or more separated blade support elements.

4. The method of claim 3, wherein scanning the laser beam includes using one or more galvo scan mirrors to steer the laser beam.

5. The method of any one of claims 1 to 4, wherein laser welding includes generating multiple weld spots for each blade support element while the one or more blade support elements are in the stationary position.

6. The method of claim 5, wherein a number of the different weld spots for each blade support elements is between 3 and 20, optionally between 6 and 16.

7. The method of claim 4 or claim 5, wherein respective positions of the weld spots are preprogrammed.

8. The method of any one of the preceding claims 1 to 7, wherein separating one or more blade support elements includes separating single blade support elements from the elongated band of material.

9. The method of any one of the preceding claims 1 to 8, wherein separating one or more blade support elements includes separating multiple contiguous blade support elements from the elongated band of material.

10. The method of any one of the preceding claims, wherein separating one or more blade support elements from the elongated band of material comprises:
bending a portion of elongated band of material; and
cutting the band of material to separate the one or more separated blade support elements including the bent portion.

11. The method of claim 10, wherein a bend axis of the bending step is parallel to the elongation direction of the elongated band of material.

12. The method of any one of the preceding claims, wherein continuously feeding an elongated band of material includes feeding the band of material from a coil.

13. The method of any one of the preceding claims, wherein the one or more blade support elements are not moving in the stationary position.

14. The method of any one of the preceding claims, wherein laser welding includes welding multiple razor blades to respective blade support elements simultaneously.

15. A razor cartridge component manufactured by the methods of any one of claims 1 to 14, wherein weld spots of welds securing razor blades to blade supports are circular.
